# EUROPEAN PATENT APPLICATION

(11) **EP 4 647 943 A1**
(43) Date of publication of application: **12.11.2025**
(21) Application number: 24901748.4
(22) Date of filing: 30.05.2024
(51) Int. Cl.: G06F 16/957

(54) **DATA PROCESSING METHOD AND APPARATUS, ELECTRONIC DEVICE, AND STORAGE MEDIUM**

(30) Priority: 15.03.2024 CN 202410302101
(71) Applicant: Hygon Information Technology Co., Ltd., Tianjin 300392 (CN)
(72) Inventor: XU, Shuai, Tianjin 300392 (CN)
(74) Representative: Maiwald GmbH
(86) International application number: PCT/CN2024/096233
(87) International publication number: WO 2025/189569

(57) **Abstract**

Embodiments of the present disclosure provide a data processing method and apparatus, electronic device and storage medium. The data processing method includes: in response to receiving a first read request from a first master device to read first data, sending first snoop information for acknowledging whether a second master device has stored the first data to the second master device through a snoop channel, wherein the first snoop information has a field indicating that the second master device needs to respond to whether the second master device has stored the first data with respect to the first snoop information. In the method, optimization of data forward is implemented by supporting a response message (e.g., ack) to the snoop information sent by the snoop channel, taking into account factors such as power consumption, delay, and network congestion during the data forward process, thereby improving performance and efficiency of the system.

## Description

The present application claims priority of Chinese Patent Application No. 202410302101.8 filed on March 15, 2024, the disclosure of which is incorporated herein by reference in its entirety as part of the present application.

### TECHNICAL FIELD

The present disclosure relates to a data processing method, a data processing apparatus, an electronic device and a non-transitory storage medium.

### BACKGROUND

Currently, caches with different states have gradually become the mainstream solution for maintaining cache coherence. However, support for data forward between peer caches is not very comprehensive, especially in a large-scale network on chip (NOC) or other complex computer network. When the number of caches is sufficient and the network size is large enough, efficiency of data transmission becomes particularly important as it directly affects power consumption, delay and bus bandwidth utilization rate of the system. In this case, if transmission and processing of data are not efficient enough, it may lead to decrease in system performance, and even affect stability and reliability of the entire system. Therefore, how to optimize and improve a data forward mechanism between peer caches becomes increasingly important.

### SUMMARY

At least one embodiment of the present disclosure provides a data processing method, including: in response to receiving a first read request from a first master device to read first data, sending first snoop information for acknowledging whether a second master device has stored the first data to the second master device through a snoop channel, wherein the first snoop information has a field indicating that the second master device needs to respond to whether the second master device has stored the first data with respect to the first snoop information.

For example, in the data processing method provided by at least one embodiment of the present disclosure, in response to receiving a first signal returned by the second master device and indicating that the second master device has stored the first data, sending a second signal, to the second master device, indicating whether the first data needs to be forwarded from the second master device.

For example, in the data processing method provided by at least one embodiment of the present disclosure, in response to the second signal indicating that the first data needs to be forwarded by the second master device, the second signal includes a forward destination address, so that the second master device directly sends the first data to the first master device, or forwards the first data to the first master device through a cache coherent node, wherein the cache coherent node is configured to maintain data coherence between a plurality of master devices.

For example, in the data processing method provided by at least one embodiment of the present disclosure, in response to the second signal indicating that the first data needs to be forwarded by the second master device, the second signal further includes data state conversion information, so that the first master device resets its own data state according to the data state conversion information after obtaining the first data.

For example, in the data processing method provided by at least one embodiment of the present disclosure, the sending the second signal, to the second master device, indicating whether the first data needs to be forwarded from the second master device, includes: sending a second signal, to the second master device, indicating that the first data does not need to be forwarded from the second master device.

For example, in the data processing method provided by at least one embodiment of the present disclosure, determining whether the first data needs to be forwarded by the second master device based on comparison of a length or a congestion level of a data transmission path required to forward the first data, wherein the length or the congestion level of the data transmission path required to forward the first data is obtained based on comparison between a plurality of master devices; the plurality of master devices all have stored the first data and received snoop information for acknowledging whether the first data is stored; and the plurality of master devices include the second master device.

For example, in the data processing method provided by at least one embodiment of the present disclosure, in response to a data transmission path for the second master device to forward data to the first master device being the shortest, determining to forward the first data from the second master device.

For example, in the data processing method provided by at least one embodiment of the present disclosure, in response to a congestion level of a data transmission path for the second master device to forward data to the first master device being the lowest, determining to forward the first data from the second master device.

For example, in the data processing method provided by at least one embodiment of the present disclosure, obtaining congestion level information of a data transmission path required to forward the first data from a monitor arranged at each node, wherein the node includes a master device node, a cache coherent node, or a routing node; and the monitor is configured to detect a congestion level of a node at a location where the monitor is located.

For example, in the data processing method provided by at least one embodiment of the present disclosure, in response to a need for the first master device to initiate the second signal to the second master device and a need for a third master device to initiate second snoop information for acknowledging whether the second master device has stored second data to the second master device, merging the second signal and the second snoop information, with a same tag being shared by the second signal and the second snoop information and simultaneously sending the second signal and the second snoop information to the second master device.

For example, in the data processing method provided by at least one embodiment of the present disclosure, in response to receiving the first read request from the first master device to read the first data, sending snoop information to one or more master devices closest to the first master device on a data transmission path for acknowledging whether the one or more master devices have stored the first data.

For example, in the data processing method provided by at least one embodiment of the present disclosure, in response to receiving the first read request from the first master device to read the first data, sending snoop information to one or more master devices belonging to a same cache coherent node or a same chip as the first master device for acknowledging whether the one or more master devices have stored the first data.

For example, in the data processing method provided by at least one embodiment of the present disclosure, in response to receiving a third signal that the second master device refuses to forward the first data, determining not to forward the first data from the second master device.

For example, in the data processing method provided by at least one embodiment of the present disclosure, in response to determining not to forward the first data from the second master device, acquiring the first data from a master device having a forward state.

For example, in the data processing method provided by at least one embodiment of the present disclosure, in response to determining not to forward the first data from the second master device, acquiring the first data from a master device closest to the first master device on a data transmission path among snooped master devices other than the second master device.

For example, in the data processing method provided by at least one embodiment of the present disclosure, in response to determining not to forward the first data from the second master device, acquiring the first data from an internal memory.

For example, in the data processing method provided by at least one embodiment of the present disclosure, in response to determining not to forward the first data from the second master device, acquiring the first data from a master device with a lowest congestion level among snooped master devices other than the second master device.

At least one embodiment of the present disclosure further provides an electronic device, the electronic device includes a plurality of master devices and a cache coherent node. The plurality of master devices includes a first master device and a second master device; the cache coherent node is configured to send first snoop information for acknowledging whether the second master device has stored first data to the second master device through a snoop channel, in response to receiving a first read request from the first master device to read the first data, wherein the first snoop information has a field indicating that the second master device needs to respond to whether the second master device has stored the first data with respect to the first snoop information.

At least one embodiment of the present disclosure further provides a data processing apparatus, the data processing apparatus includes at least one memory and at least one processor. The at least one memory is configured to store a computer executable instruction; and the at least one processor is configured to execute the computer executable instruction, wherein the computer executable instruction, when executed by the at least one processor, implements the method according to any one of the above embodiments.

At least one embodiment of the present disclosure further provides a non-transitory storage medium, the non-transitory storage medium stores a computer executable instruction non-transitorily, wherein the computer executable instruction, when executed by a processor, implements the method according to any one of above embodiments.

### BRIEF DESCRIPTION OF DRAWINGS

In order to clearly illustrate the technical solution of the embodiments of the present disclosure, the drawings of the embodiments will be briefly described in the following; it is obvious that the described drawings are only related to some embodiments of the present disclosure and thus are not intended to limit the present disclosure.
Fig. 1 illustrates a schematic diagram of a network-on-chip topology.
Fig. 2 illustrates a schematic flow chart of a data processing method provided by at least one embodiment of the present disclosure.
Fig. 3 illustrates a schematic diagram of a data forward principle provided by at least one embodiment of the present disclosure.
Fig. 4 illustrates a schematic diagram of a principle of monitoring a network node congestion level provided by at least one embodiment of the present disclosure.
Fig. 5 illustrates a schematic diagram of a principle of compression of a flow control unit or a data packet unit (flit) provided by at least one embodiment of the present disclosure.
Fig. 6 illustrates a schematic diagram of a principle of refusing to forward data provided by at least one embodiment of the present disclosure.
Fig. 7 illustrates a schematic diagram of an electronic device provided by at least one embodiment of the present disclosure.
Fig. 8 illustrates a schematic diagram of a data processing apparatus provided by at least one embodiment of the present disclosure.
Fig. 9 illustrates a schematic diagram of a non-transitory storage medium provided by at least one embodiment of the present disclosure.

### DETAILED DESCRIPTION

In order to make objects, technical details and advantages of the embodiments of the present disclosure apparent, the technical solutions of the embodiments of the present disclosure will be described in a clearly and fully understandable way in connection with the accompanying drawings of the embodiments of the present disclosure. It is obvious that the described embodiments are just a part but not all of the embodiments of the present disclosure. Based on the embodiments described herein, those ordinarily skilled in the art may obtain other embodiment(s), without any inventive work, which should be within the scope of the present disclosure.

Unless otherwise defined, the technical terms or scientific terms used in the present disclosure shall have the usual meanings understood by those ordinarily skilled in the art to which the present disclosure belongs. The terms "first", "second" and similar words used in the present disclosure do not represent any order, quantity or importance, but are only used to distinguish different components. Words such as "include" or "comprise" and the like denote that elements or objects appearing before the words of "include" or "comprise" cover the elements or the objects enumerated after the words of "include" or "comprise" or equivalents thereof, not exclusive of other elements or objects. Words such as "connected" or "connecting" and the like are not limited to physical or mechanical connections, but may include electrical connection, either direct or indirect. Words such as "up", "down", "left", "right" and the like are only used for expressing relative positional relationship; and when the absolute position of the described object is changed, the relative positional relationship may also be correspondingly changed.

**In** order to maintain clarity and conciseness of the following description of the embodiments of the present disclosure, detailed description of some known functions and components is omitted in the present disclosure.

The network on chip (NOC) is communication architecture based on a system on chip (SoC), and is used for connecting various functional modules and processor cores within a chip to implement internal communication of the chip. The NOC is constituted by a group of communication channel(s), router(s), and switch(es), and is used for transmitting data and control signals within the chip. A main purpose of the NOC is to provide high bandwidth, low delay, and a reliable communication mechanism, so as to support communication needs between various functional modules in a multi-core processor and a large-scale integrated circuit.

A plurality of functional modules are connected in the NOC; each functional module may include at least one cache; and data in each cache may include an M (Modified) state, an E (Exclusive) state, an S (Shared) state, an I (Invalid) state, an O (Owned) state, and an F (Forward) state (i.e., cache states of MESIOF):
**●** The M state represents that a cache block exclusively owns corresponding data, and the data has been modified and has not yet been written back to an internal memory;
**●** The E state represents that a cache block exclusively owns corresponding data, and the data has not been modified;
**●** The S state represents that a cache block shares corresponding data with other cache;
● The I state represents that a cache block has not cached corresponding data;
**●** The O state represents that a cache block has dirty data (or modified data), and the dirty data is shared by other cache; and
**●** The F state represents a cache used for forwarding data among a plurality of caches in the S state.

It should be noted that although the embodiments of the present disclosure illustrate six states of MESIOF here, the embodiments of the present disclosure are not limited thereto, and the specific number of states may be flexibly set or defined according to different situations.

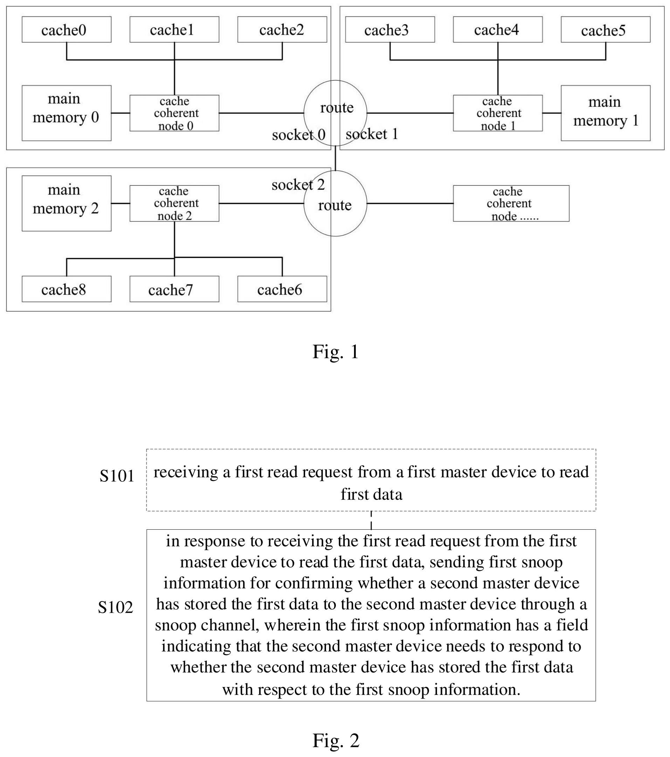

Fig. 1 illustrates a schematic diagram of a network-on-chip (NOC) topology. As shown in Fig. 1, in the NOC topology, a system includes one or more routing nodes; each routing node includes one or more sockets; and each socket is connected with one or more cache coherent nodes. For example, as shown in Fig. 1, each socket is connected with one cache coherent node; and the cache coherent node is connected with a main memory or an internal memory and is connected with one or more caches, so as to be used for maintaining data coherence in the one or more caches.

For example, the system shown in Fig. 1 includes two routing nodes; one routing node includes sockets 0 and 1, and the other one routing node includes socket 2 and other sockets; sockets 0 to 2 are respectively connected with cache coherent nodes 0 to 2; cache coherent nodes 0 to 2 are respectively connected with main memories (or internal memories) 0 to 2; and cache coherent nodes 0 to 2 are respectively connected with caches 0 to 2, 3 to 5, and 6 to 8, so as to maintain data coherence between the different caches.

It should be noted that, although specific numbers of routing nodes, sockets, cache coherent nodes, main memories, and caches are shown in Fig. 1, the specific numbers of routing nodes, sockets, cache coherent nodes, main memories, and caches are not limited in the embodiments of the present disclosure; the specific numbers shown in Fig. 1 are only exemplarily shown for describing the technical idea of the embodiments of the present disclosure; in practice, the numbers may be modified to any suitable values according to actual situations. In addition, although the technical solution of the embodiments of the present disclosure is described in the present disclosure in terms of the network on chip (NOC), this is only for better description of the technical solution of the embodiments of the present disclosure; in fact, the technical solution of the embodiments of the present disclosure may also be applied to networks or interconnection structures larger than the network on chip. For example, each cache corresponds to a storage space of any network device at a network node.

For example, as shown in Fig. 1, any one of caches 0 to 8 may correspond to one or more master devices; and one master device may include one or more processors (or processor cores). For example, when one master device needs to use data, the master device will firstly search for the required data from its own corresponding cache (i.e., dedicated to the master device or shared by the master device and other master device); only when the required data is not found in its own corresponding cache, will the master device acquire the required data from an address such as an internal memory, a private cache of another master device (e.g. a cache having the data forward state F), etc., according to a communication protocol.

For example, when a cache or a master device corresponding to the cache wants to read data, there are two possible sources. For example, when there is no dirty data in the system, the cache will acquire data from a main memory where the corresponding address is located. For example, the cache may also acquire data from a peer cache in the network (NOC). For example, as shown in Fig. 1, it is assumed that cache 3 wants to acquire data managed by cache coherent node 1, cache 0 is in the F/O state, and cache 4, cache 5, and cache 8 are all in the S state. The current solution is acquiring data from cache 0; however, since data transmission across sockets may not necessarily be faster than directly acquiring data from cache coherent node 1, more refined improvements need to be made to the current mode of acquiring data.

When there are cache devices in the F+multi S state in the system (i.e., the system stores a plurality of caches in the S state, and a certain cache among the plurality of caches is in the data forward state F), if the cache device holding F (or the state F) sends a command (e.g., vicblkcln) to evict the F state, no other cache devices in the entire system will inherit the F state. In addition, since the communication protocol (e.g., CHI) may support direct local transformation of clean data from the S state to the I state, when the plurality of cache devices in the system have the S state, it is difficult to directly determine whether the plurality of cache devices in the system all have stored data, or which location the data is stored in. In this case, when a new cache device initiates a read operation, it will not acquire the data from a peer cache, but directly access the main memory to acquire the data, which will increase data delay and increase bandwidth pressure of the main memory.

**In** a multi-socket system, in order to improve data transmission efficiency of the system, data may be sent to a data requester nearby when a cache read operation is initiated, because power consumption problems, bandwidth demand problems, and delay problems will be incurred if a data transmission distance is too long. For example, the longer the distance and the time for which the data is circulated in the network, the greater the increase in dynamic power consumption will be brought thereby. For example, in a complex network topology, excessively long data transmission distance may lead to more occurrences of congestion. For example, if the data is not forwarded nearby, then a period from initiating a request from a source to receiving the data will become longer.

At least one embodiment of the present disclosure provides a data processing method, and the data processing method includes: in response to receiving a first read request from a first master device to read first data, sending first snoop information for acknowledging whether a second master device has stored first data to the second master device through a snoop channel, wherein the first snoop information has a field indicating that the second master device needs to respond to whether the second master device has stored the first data with respect to the first snoop information.

**In** the data processing method according to the above-described embodiment of the present disclosure, optimization of data forward is implemented by supporting a response message (e.g., ack) to the snoop information sent by the snoop channel, taking into account factors such as power consumption, delay, and network congestion during the data forward process, thereby improving performance and efficiency of the system.

At least one embodiment of the present disclosure further provides an electronic device, and the electronic device includes a plurality of master devices and cache coherent nodes. For example, the plurality of master devices include a first master device and a second master device; and the cache coherent node is configured to, in response to receiving a first read request from the first master device to read first data, send first snoop information for acknowledging whether the second master device has stored the first data to the second master device through a snoop channel, wherein the first snoop information has a field indicating that the second master device needs to respond whether the second master device has stored the first data with respect to the first snoop information.

A technical effect of the electronic device according to the above-described embodiment of the present disclosure is the same as a technical effect of the above-described data processing method, and the details will not be repeated here.

Hereinafter, the respective embodiments of the present disclosure will be illustrated in conjunction with specific examples.

Fig. 2 illustrates a schematic flow chart of a data processing method provided by at least one embodiment of the present disclosure. As shown in Fig. 2, in some embodiments of the present disclosure, the data processing method includes a step S101 and a step 102.

Step S101: receiving a first read request from a first master device to read first data.

Step 102: in response to receiving the first read request from the first master device to read the first data, sending first snoop information for acknowledging whether a second master device has stored the first data to the second master device through a snoop channel.

For example, the first snoop information has a field indicating that the second master device needs to respond to the first snoop information regarding whether the second master device has stored the first data.

For example, firstly, the first read request to read the first data is received from the first master device; and then the first snoop information for acknowledging whether the second master device has stored the first data is sent to the second master device through the snoop channel. The term "first data" here refers to data that serves as an object of description; and type and size of the data are not limited in the present disclosure.

For example, referring to Fig. 1 again, the technical solution of the embodiments of the present disclosure will be exemplarily described by taking that the first master device corresponds to cache 3 and the second master device corresponds to cache 4 as an example.

For example, when any one (e.g., cache coherent node 1) of cache coherent nodes 0 to 2 receives any first read request from the cache 3 to read the first data, the cache coherent node 1 sends the first snoop information for acknowledging whether the cache 4 has stored the first data to the cache 4 through the snoop channel. For example, the first snoop information has a field indicating that the cache 4 needs to respond whether the cache 4 has stored the first data with respect to the first snoop information. For example, after the cache 4 receives the first snoop information from the cache coherent node 1, the cache 4 needs to respond with respect to the first snoop information; and the response information includes an indication of whether the cache 4 has cached the first data to be read by the cache 3. It should be noted that, an operation performed by the cache mentioned here may include an operation performed by a master device corresponding to the cache.

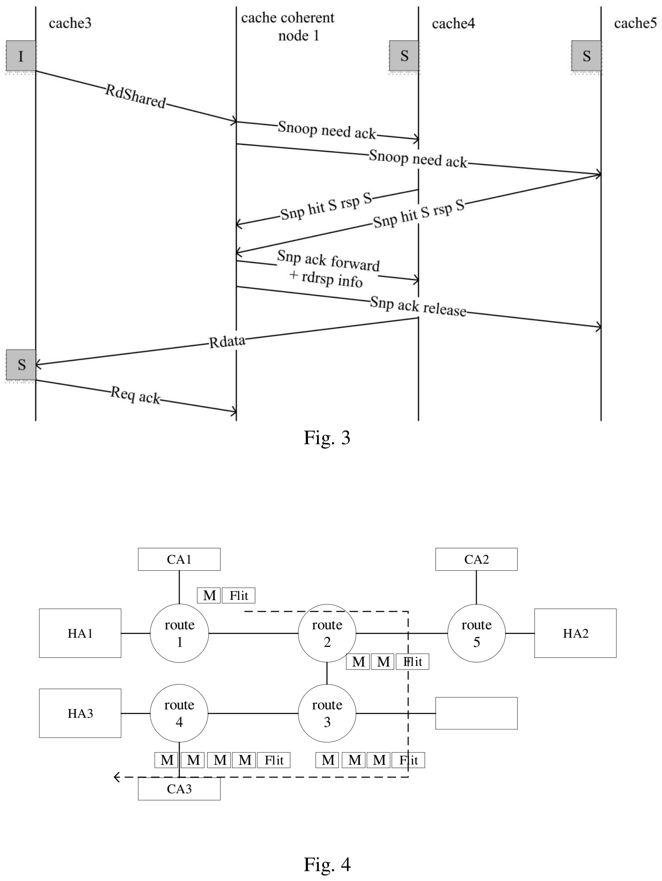

Fig. 3 illustrates a schematic diagram of a data forward principle provided by at least one embodiment of the present disclosure. For example, as shown in Fig. 3, in response to receiving a first read request RdShared to read the first data from cache 3, first snoop information Snoop need ack (i.e., snoop that needs to be acknowledged) for acknowledging whether cache 4 has stored the first data is sent to cache 4 through the snoop channel. For example, the first snoop information Snoop need ack has a field indicating that cache 4 needs to respond whether cache 4 has stored the first data with respect to the first snoop information. For example, the field may occupy at least one bit. For example, if cache 4 does not need to respond whether cache 4 has stored the first data with respect to the first snoop information, then the field may be set to a certain custom value (e.g., 0), so that cache 4 will not respond to whether cache 4 has stored the first data with respect to the first snoop information, and thus, the technical solution of the embodiments of the present disclosure may be more compatible with the existing design.

For example, in response to receiving a first signal returned by the second master device and indicating that the second master device has stored the first data, a second signal indicating whether the first data needs to be forwarded from the second master device is sent to the second master device.

For example, as shown in Fig. 3, in response to receiving a first signal Snp hit S rsp S (i.e., a snoop hit response), returned by the cache 4, indicating that the cache 4 has stored the first data, a second signal indicating whether the first data needs to be forwarded from the cache 4 is sent to the cache 4. For example, as shown in Fig. 3, the second signal may be a signal Snp ack forward+rdrsp info (i.e., snoop acknowledging forward + response additional information) (or Snp ack forward (i.e., snoop acknowledging forward) indicating that the first data needs to be forwarded by the cache 4, or a signal Snp ack release (i.e., snoop acknowledging release) indicating the first data does not need to be forwarded by cache 4.

For example, in response to the second signal indicating that the first data needs to be forwarded by the second master device, the second signal includes a forward destination address, so that the second master device directly sends the first data to the first master device, or the second master device forwards the first data to the first master device through a cache coherent node. For example, the cache coherent node is configured to maintain data coherence between a plurality of master devices.

For example, in response to the second signal (Snp ack forward+rdrsp info or Snp ack forward) indicating that the first data needs to be forwarded by the cache 4, the second signal includes the forward destination address (e.g., an address of the cache 3), so that the cache 4 directly sends the first data (referring to Rdata in Fig. 3) to the cache 3 according to the forward destination address. For example, after receiving the first data, the cache 3 returns a message ack (or Req ack (i.e., request acknowledgement)) for acknowledging receipt of the first data to the cache coherent node 1. For example, in response to the second signal (Snp ack forward+rdrsp info or Snp ack forward) indicating that the first data needs to be forwarded by the cache 4, the cache 4 firstly sends the first data to the cache coherent node 1, and the cache coherent node 1 further forwards the first data received from the cache 4 to the cache 3. For example, in a case where the second signal sent to cache 4 indicates that the first data needs to be forwarded by cache 4 and cache 4 needs to firstly send the first data to cache coherent node 1 for unified processing (i.e., further sending, by the cache coherent node 1, to a requester or cache 3), the second signal may only be Snp ack forward, without including rdrsp info to indicate information of the address of destination cache 3 or other additional information used for implementing a function of cache 4 directly sending the first data to cache 3; in this case, the system may default to firstly sending the first data to the cache coherent node 1 for unified processing. For example, the cache coherent node 1 may be configured to maintain data coherence between a plurality of caches.

By carrying rdrsp info in Snp ack forward, the number of data transmissions of sending data from a data forwarder (e.g., the cache 4) to a data requester (e.g. the cache 3) may be reduced; and the data forwarder directly sends data to the data requester without relaying or forwarding through a cache coherent node, which reduces delay during data transmission, lowers bandwidth requirements for data transmission, and reduces power consumption required in data transmission.

For example, sending a second signal, to the second master device, indicating whether the first data needs to be forwarded from the second master device, includes: sending a second signal, to the second master device, indicating that the first data does not need to be forwarded from the second master device.

For example, in response to the second signal (Snp ack release) indicating that the first data does not need to be forwarded from the cache 4, the cache 4 does not need to send the first data to the cache 3, and does not need to make any response to Snp ack release. It should be noted that, for ease of description, Fig. 3 only illustrates the case where the cache coherent node 1 sends Snp ack release to the cache 5.

For example, as shown in Fig. 3, when the cache coherent node 1 receives the first read request RdShared to read the first data from the cache 3, the cache coherent node 1 sends the snoop information Snoop need ack for acknowledging whether a cache has stored the first data to a plurality of caches (taking cache 4 and cache 5 as examples in Fig. 3). For example, in response to receiving the snoop information Snoop need ack, cache 4 and cache 5 both return signals Snp hit S rsp S indicating the first data is stored therein to the cache coherent node 1. For example, in response to receiving the signals Snp hit S rsp S indicating that the first data is stored therein from the cache 4 and the cache 5, the cache coherent node determines to send Snp ack forward+rdrsp info or Snp ack forward to the cache 4, and send Snp ack release to the cache 5.

For example, in response to receiving the first read request from the first master device to read the first data, snoop information for acknowledging whether one or more master devices have stored the first data is sent to one or more master devices closest to the first master device on a data transmission path.

For example, in response to receiving the first read request from the cache 3 to read the first data, the cache coherent node 1 may not send snoop information for acknowledging whether one or more caches have stored the first data to all caches having the S state, but only send the snoop information for acknowledging whether one or more caches have stored the first data to caches that meet specific conditions.

For example, in response to receiving the first read request from the cache 3 to read the first data, the cache coherent node 1 may send snoop information for acknowledging whether one or more caches have stored the first data to one or more caches closest to the cache 3 on the data transmission path. For example, in a case that the cache coherent node 1 is unsure which caches have stored the first data, the cache coherent node 1 may broadcast and send, to the socket where the requester (e.g., cache 3) is located, snoop information for acknowledging whether one or more caches connected with or managed by the socket have stored the first data. For example, routing distance determination logic may be added at the cache coherent node, and then adapted by corresponding software, so as to acquire a length of a data transmission path for the data forwarder (e.g., cache 4) to forward data to the data requester (e.g., cache 3). For example, which cache is closer to the data requester on the data transmission path may also be determined or divided depending on the socket or according to the socket. The method for measuring a length of a data transmission path is not specifically limited in the present disclosure, as long as length data of the data transmission path can be acquired.

For example, in response to receiving the first read request from the first master device to read the first data, the snoop information for acknowledging whether one or more master devices have stored the first data is sent to one or more master devices belonging to the same cache coherent node or chip as the first master device.

**In** response to receiving the first read request from the cache 3 to read the first data, the cache coherent node 1 sends the snoop information for acknowledging whether one or more caches have stored the first data to one or more caches belonging to the same cache coherent node or chip as cache 3.

For example, it is determined whether the first data needs to be forwarded by the second master device based on comparison of a length or a congestion level of the data transmission path required to forward the first data. For example, the length or the congestion level of the data transmission path required to forward the first data is obtained based on comparison between a plurality of master devices; the plurality of master devices all have stored the first data and receive the snoop information for acknowledging whether the first data is stored; and the plurality of master devices include the second master device.

For example, taking that the second master device includes two caches, i.e., cache 4 and cache 5, as an example, in a case that the cache coherent node 1 acknowledges that the cache 4 and the cache 5 both have cached the first data, the cache coherent node 1 determines whether the second master device (e.g., cache 4 or cache 5) needs to forward the first data based on comparison of the lengths or the congestion levels of the data transmission paths required to forward the first data. For example, the lengths or the congestion levels of the data transmission paths required to forward the first data is obtained based on comparison between the cache 4 and the cache 5.

For example, in response to the data transmission path for the second master device to forward the data to the first master device being the shortest, it is determined to forward the first data from the second master device. For example, the cache coherent node 1 may choose a shorter data transmission path, for data forwarding, between the data transmission path for forwarding the first data from the cache 4 to the cache 3 and the data transmission path for forwarding the first data from the cache 5 to the cache 3. For example, when the data transmission path for forwarding the first data from the cache 4 to the cache 3 is shorter than the data transmission path for forwarding the first data from the cache 5 to the cache 3, it is determined to forward or acquire the data from the cache 4.

For example, in response to the congestion level of the data transmission path for the second master device to forward the data to the first master device being the lowest, it is determined to forward the first data from the second master device. For example, the cache coherent node 1 may choose a data transmission path having no congestion problem or having a lower congestion level, for data forwarding, between the congestion level of the data transmission path for forwarding the first data from the cache 4 to the cache 3 and the congestion level of the data transmission path for forwarding the first data from the cache 5 to the cache 3. For example, when the congestion level of the data transmission path for forwarding the first data from the cache 4 to the cache 3 is lower than the congestion level of the data transmission path for forwarding the first data from the cache 5 to the cache 3, it is determined to forward or acquire the data from the cache 4.

It should be noted that, although Fig. 3 specifically illustrates that the cache coherent node 1 sends the snoop information Snoop need ack to two caches (the cache 4 and the cache 5), the embodiments of the present disclosure are not limited thereto; in practical situations, the cache coherent node 1 may send the snoop information Snoop need ack to any number of caches. In addition, although the embodiments are described by taking the cache coherent node 1 as an example in the present disclosure, it should be clear that the operation performed by the cache coherent node 1 may also be applied to any other cache coherent node.

For example, in response to the second signal indicating that the second master device needs to forward the first data, the second signal further includes data state conversion information, so that the first master device resets its own data state according to the data state conversion information after obtaining the first data.

For example, in response to the second signal Snp ack forward+rdrsp info indicating that the first data needs to be forwarded by cache 4, the second signal further includes data state conversion information (e.g., included in rdrsp info of Snp ack forward+rdrsp info), so that the cache 3 resets its own data state according to the data state conversion information after obtaining the first data. For example, after obtaining the first data, the cache 3 sets its own data state from the I state to the S state according to the data state conversion information.

Fig. 4 illustrates a schematic diagram of a principle of monitoring a network node congestion level provided by at least one embodiment of the present disclosure.

For example, congestion level information of a data transmission path required for the first data is obtained from a monitor arranged at each node, wherein the node include a master device node, a cache coherent node, or a routing node; and the monitor may be configured to detect a congestion level of a node at a location where the monitor is located.

For example, although forward nearby is logically the optimal choice, yet if the network in the vicinity of the initiator is already congested, it may also be considered to send data from a remote end (i.e., a cache having the S state that is not closest to the requester). For example, to this end, a monitor (M) needs to be added at each node to monitor a request, handle delay caused by a message such as snoop during transmission accordingly, and determine a congestion level of the corresponding node according to delay time. For example, if the delay time for receiving a response or a message from a node is longer, it indicates that the node is more congested.

For example, as shown in Fig. 4, the system includes a plurality of network nodes; the plurality of network nodes include at least one of a plurality of host agent nodes HA (e.g., cache coherent nodes), a plurality of cache agent nodes (CA), and a plurality of routing nodes (e.g., route 1 to route 5). It should be noted that although only a few nodes are specifically mentioned here, it should be clear that this is only exemplary, the embodiments of the present disclosure are not limited thereto, and any network branch point may be regarded as a network node. One or more nodes composed of the plurality of host agent nodes HA (e.g. cache coherent nodes HA1 to HA3), the plurality of cache agent nodes (e.g. CA1 to CA3), the plurality of routing nodes, and/or any other types of nodes may each be provided with a monitor, used for monitoring a congestion level of a node corresponding to the monitor. For example, if a congestion level of a dashed path in Fig. 4 needs to be calculated, the congestion level of the dashed path may be obtained through data counted by monitor(s) arranged on the dashed path. For example, the monitor may monitor delay caused by flit during transmission; when flit is congested at a network node for more than a certain cycle, one-hot will be marked. In this way, the cache coherent node may know a congestion situation of the entire network. For example, with respect to a location having not been counted or in a cast that a statistical result becomes outdated due to timeout, a corresponding node may be default to be unobstructed (or not congested).

For example, after obtaining data of congestion levels of different nodes through monitoring by the monitors, if a congestion level of data transmission from one node to another node is to be calculated, congestion data of all nodes on the data transmission path from the one node to the another node may undergo weighted calculation to obtain a numerical value of the congestion level of the data transmission path from the one node to the another node. For example, the congestion level values of the respective nodes are respectively multiplied by specific weight values of the corresponding nodes, and then the respective values are added together, so that a result obtained thereby is the numerical value of the congestion level of the data transmission path from the one node to the another node. For example, as shown in Fig. 4, a numerical value of a congestion level of a data transmission path from node CA1 to CA3 may be obtained by firstly respectively multiplying four congestion level values obtained by monitors arranged at four different nodes from route 1 to route 4 by preset weight values respectively corresponding to route 1 to route 4, and then adding these obtained four values together.

For example, after the monitors obtain the congestion level values of the respective nodes, a congestion level value on a specific data transmission path may be predicted through data fitting. For example, if a possible congestion level, at a future time point, from a cache agent node CA1 to a cache agent node CA3 is to be predicted, congestion level values at different time points on the data transmission path from the node CA1 to the node CA3 may be collected, so as to establish a horizontal axis and a vertical axis based on the time points and the congestion level values (e.g., the horizontal axis may be the time points or the congestion level values), and then fit the changes in the congestion level values over time on the data transmission path from node CA1 to node CA3 into a function through means of data fitting. For example, through the fitted function, a congestion level value at a future time point may be predicted.

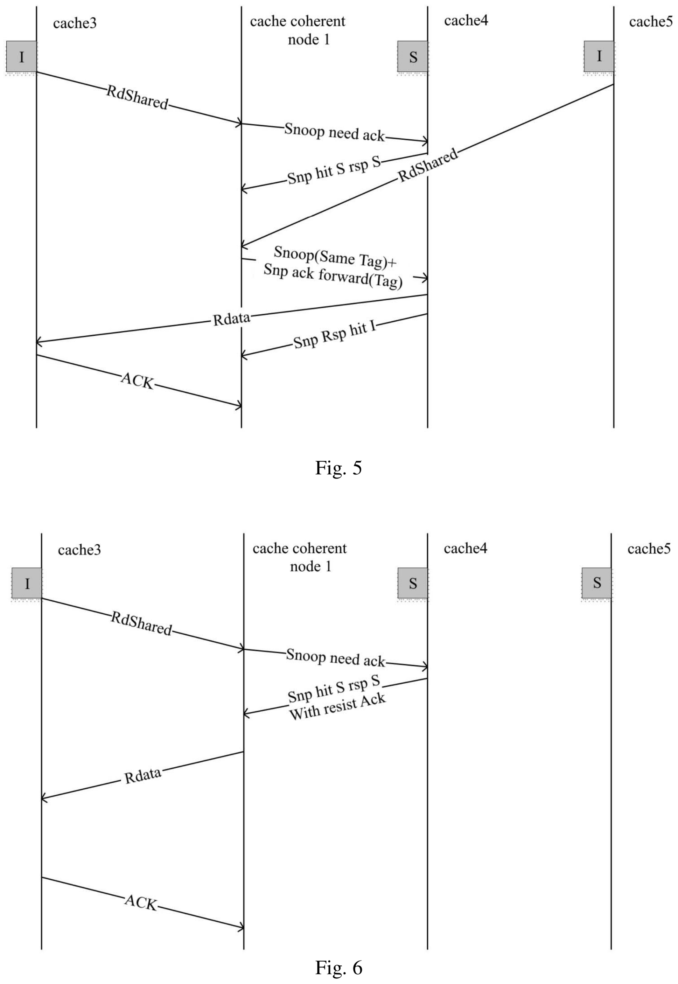

Fig. 5 illustrates a schematic diagram of a principle of compression of a flow control unit or a packet unit (flit) provided by at least one embodiment of the present disclosure.

For example, in response to a need for the first master device to initiate the second signal to the second master device and a need for a third master device to initiate second snoop information for acknowledging whether the second master device has stored second data to the second master device, the second signal and the second snoop information are merged and share a same tag and are simultaneously sent to the second master device.

For example, as shown in Fig. 5, in response to the need for the cache 3 to initiate the second signal (Snp ack forward or Snp ack forward + rdrsp info) to the cache 4 and the need for cache 5 (here referred to as the third master device) to initiate the second snoop information (Snoop need ack) for acknowledging whether the cache 4 has stored the second data to cache 4, the cache coherent node 1 may merge the second signal Snp ack forward (or Snp ack forward+rdrsp info) and the second snoop information Snoop need ack allowing them to share a same Tag and simultaneously send them to the cache 4. For example, the second data may be the same or different from the foregoing first data. For example, although the cache 3 and the cache 5 adopt the same Tag, they belong to steps in different stages, so the system may distinguish which requester (e.g., cache 3 or cache 5) causes a plurality of pieces of information having a same Tag according to steps in different stages. Therefore, the method may reduce network bandwidth pressure. As shown in Fig. 5, when the cache 4 has not cached the data required for the cache 3 or the cache 5, Snp Rsp hit I may be returned to the cache coherent node 1 to indicate that the cache 4 has not cached the data required for the cache 3 or the cache 5. It should be noted that, although Fig. 5 only illustrates the complete process of the cache 4 returning the data to the requester cache 3, omitting a portion of the process of the cache 4 returning the data to the cache 5, yet actually, the data request process of the cache 5 with respect to cache 4 may be similar to the data request process of the cache 3 with respect to the cache 4.

Fig. 6 illustrates a schematic diagram of a principle of refusing to forward data provided by at least one embodiment of the present disclosure.

For example, in response to receiving a third signal that the second master device refuses to forward the first data, it is determined not to forward the first data from the second master device.

For example, in response to receiving a third signal (Snp hit S rsp S with resist Ack) that the cache 4 refuse to forward the first data, the cache coherent node 1 determines not to forward the first data from the cache 3. For example, even if the cache 3 has cached the first data, the cache 3 may still send Snp hit S rsp S with resist Ack to the cache coherent node 1 based on any stipulated reason. For example, the cache 3 may determine not to forward the first data based on a series of information such as congestion, QoS, software configuration, etc., and send Snp hit S rsp S with resist Ack to the cache coherent node 1.

For example, in response to determining not to forward the first data from the second master device, the first data is acquired from a master device having the forward state. For example, since the cache 4 refuses to forward the first data, the cache coherent node 1 determines not to forward the first data from the cache 4, and instead acquire the first data from a peer cache having the forward state (F state) other than the cache 4.

For example, in response to determining not to forward the first data from the second master device, the first data is acquired from the master device closest to the first master device on the data transmission path among the snooped master devices other than the second master device. For example, since the cache 4 refuses to forward the first data, the cache coherent node 1 determines not to forward the first data from the cache 4 and instead acquire the first data from the cache closest to cache 3 on the data transmission path among the snooped caches other than the cache 4.

For example, in response to determining not to forward the first data from the second master device, the first data is acquired from an internal memory. For example, since the cache 4 refuses to forward the first data, the cache coherent node 1 determines not to forward the first data from the cache 4, and instead acquire the first data directly from the internal memory.

For example, in response to determining not to forward the first data from the second master device, the first data is acquired from the master device with the lowest congestion level among the snooped master devices other than the second master device. For example, since the cache 4 refuses to forward the first data, the cache coherent node 1 determines not to forward the first data from the cache 4, and instead acquire the first data from the cache with the lowest congestion level among the snooped caches other than the cache 4.

In the data processing method according to the above-described embodiments of the present disclosure, optimization of data forward is achieved by supporting a response message (e.g., ack) to the snoop information sent by the snoop channel, taking into account factors such as power consumption, delay, and network congestion during the data forward process, thereby improving performance and efficiency of the system.

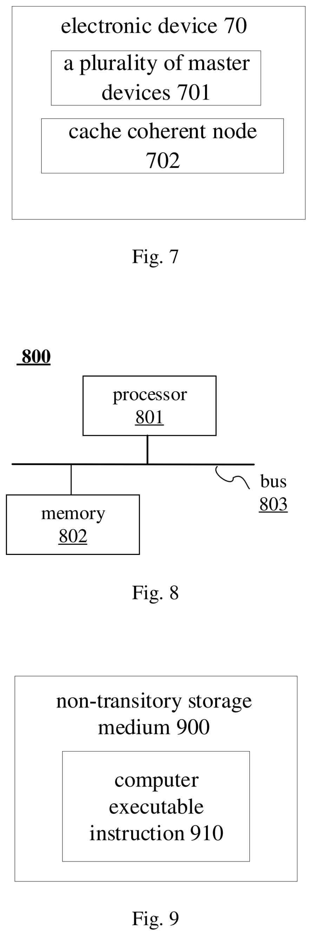

Fig. 7 illustrates a schematic diagram of an electronic device 70 provided by at least one embodiment of the present disclosure. The electronic device 70 includes a plurality of master devices 701 and a cache coherent node 702. For example, the plurality of master devices 701 includes a first master device and a second master device. For example, the cache coherent node 702 may be configured to send first snoop information for acknowledging whether the second master device has stored first data to the second master device through a snoop channel, in response to receiving a first read request from the first master device to read the first data. For example, the first snoop information has a field indicating that the second master device needs to respond to whether the second master device has stored the first data with respect to the first snoop information.

For example, the cache coherent node 702 is further configured to, in response to receiving a first signal returned by the second master device and indicating that the second master device has stored the first data, send a second signal, to the second master device, indicating whether the first data needs to be forwarded from the second master device.

The cache coherent node 702 is further configured that, in response to the second signal indicating that the first data needs to be forwarded by the second master device, the second signal includes a forward destination address, so that the second master device directly sends the first data to the first master device, or forwards the first data to the first master device through the cache coherent node 702. For example, the cache coherent node 702 is configured to maintain data coherence between a plurality of master devices 701.

The cache coherent node 702 is further configured that, in response to the second signal indicating that the first data needs to be forwarded by the second master device, the second signal further includes data state conversion information, so that the first master device resets its own data state according to the data state conversion information after obtaining the first data.

The cache coherent node 702 is further configured to send a second signal, to the second master device, indicating that the first data does not need to be forwarded from the second master device.

The cache coherent node 702 is further configured to determine whether the first data needs to be forwarded by the second master device based on comparison of a length or a congestion level of a data transmission path required to forward the first data. For example, the length or the congestion level of the data transmission path required to forward the first data is obtained based on comparison between a plurality of master devices 701; the plurality of master devices 701 all have stored the first data and received snoop information for acknowledging whether the first data is stored; and the plurality of master devices 701 include the second master device.

The cache coherent node 702 is further configured to, in response to a data transmission path for the second master device to forward data to the first master device being the shortest, determine to forward the first data from the second master device.

The cache coherent node 702 is further configured to, in response to a congestion level of a data transmission path for the second master device to forward data to the first master device being the lowest, determine to forward the first data from the second master device.

The cache coherent node 702 is further configured to obtain congestion level information of a data transmission path required to forward the first data from a monitor arranged at each node. For example, the node includes a master device node, a cache coherent node 702, or a routing node; and the monitor is configured to detect a congestion level of a node at a location where the monitor is located.

The cache coherent node 702 is further configured to, in response to a need for the first master device to initiate the second signal to the second master device and a need for a third master device to initiate second snoop information for acknowledging whether the second master device has stored second data to the second master device, merge the second signal and the second snoop information, with a same tag being shared by the second signal and the second snoop information and simultaneously send the second signal and the second snoop information to the second master device.

The cache coherent node 702 is further configured to, in response to receiving the first read request from the first master device to read the first data, send snoop information to one or more master devices 701 closest to the first master device on a data transmission path for acknowledging whether the one or more master devices 701 have stored the first data.

The cache coherent node 702 is further configured to, in response to receiving the first read request from the first master device to read the first data, send snoop information to one or more master devices 701 belonging to a same cache coherent node 702 or a same chip as the first master device for acknowledging whether the one or more master devices 701 have stored the first data.

The cache coherent node 702 is further configured to, in response to receiving a third signal that the second master device refuses to forward the first data, determine not to forward the first data from the second master device.

The cache coherent node 702 is further configured to, in response to determining not to forward the first data from the second master device, acquire the first data from a master device having a forward state.

The cache coherent node 702 is further configured to, in response to determining not to forward the first data from the second master device, acquire the first data from a master device closest to the first master device on a data transmission path among snooped master devices other than the second master device.

The cache coherent node 702 is further configured to, in response to determining not to forward the first data from the second master device, acquire the first data from an internal memory.

The cache coherent node 702 is further configured to, in response to determining not to forward the first data from the second master device, acquire the first data from a master device with a lowest congestion level among snooped master devices other than the second master device.

In the electronic device according to the above-described embodiment of the present disclosure, optimization of data forward is achieved by supporting a response message (e.g., ack) to the snoop information sent by the snoop channel, taking into account factors such as power consumption, delay, and network congestion during the data forward process, thereby improving performance and efficiency of the system.

At least some embodiments of the present disclosure further provide a data processing apparatus; and the data processing apparatus includes at least one processor and at least one memory. For example, the at least one memory may be configured to store computer executable instructions; and the at least one processor may be configured to execute the computer executable instructions. For example, the computer executable instruction, when executed by the at least one processor, implements the data processing method provided by at least one embodiment of the present disclosure.

Fig. 8 illustrates a schematic diagram of a data processing apparatus provided by at least one embodiment of the present disclosure.

As shown in Fig. 8, the data processing apparatus 800 according to the embodiment of the present disclosure includes a processor 801 and a memory 802; and the processor 801 and the memory 802 may be interconnected through a bus 803.

The processor 801 may execute various actions and processing according to programs or codes stored in the memory 802. Specifically, the processor 801 may be an integrated circuit chip having a signal processing capability. For example, the above-described processor 801 may be a general-purpose processor, a digital signal processor (DSP), an application specific integrated circuit (ASIC), a field programmable gate array (FPGA) or other programmable logic device, discrete gate or transistor logic device, or discrete hardware components, which may implement or execute various methods and steps disclosed in the embodiments of the present disclosure. The general-purpose processor may be a microprocessor, or the processor may also be any conventional processor, etc., which may be of X86 architecture, ARM architecture, or RISC-V architecture or the like.

The memory 802 is configured to store computer executable instructions non-transitorily; and the processor 801 is configured to execute the computer executable instructions. The computer executable instructions, when executed by the processor 801, implement the data processing method provided by at least one embodiment of the present disclosure.

For example, the memory 802 may be a volatile memory or a non-volatile memory, or may include both the volatile memory and the non-volatile memory. The non-volatile memory may be a read only memory (ROM), a programmable read only memory (PROM), an erasable programmable read only memory (EPROM), an electrically erasable programmable read only memory (EEPROM) or a flash memory. The volatile memory may be a random access memory (RAM), which is used as an external cache. By way of illustration but not limitation, many forms of RAM, for example, a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synchronous link dynamic random access memory (SLDRAM), and a direct rambus random access memory (DRRAM) are available. It should be noted that the memories in the method as described here are intended to include, but are not limited to, these and any other suitable types of memories.

**In** the data processing apparatus according to the above-described embodiment of the present disclosure, optimization of data forward is implemented by supporting a response message (e.g., ack) to the snoop information sent by the snoop channel, taking into account factors such as power consumption, delay, and network congestion during the data forward process, thereby improving performance and efficiency of the system.

At least one embodiment of the present disclosure further provides a non-transitory storage medium, storing computer executable instructions non-transitorily. For example, the computer executable instructions, when executed by a processor, implement the data processing method provided by at least one embodiment of the present disclosure.

Fig. 9 is a schematic diagram of a non-transitory storage medium provided by some embodiments of the present disclosure. As shown in Fig. 9, the non-transitory storage medium 900 may store computer executable instructions 910 non-transitorily; and the computer executable instructions 910, when executed by a computer, implement the data processing method provided by any embodiment of the present disclosure.

Similarly, the non-transitory storage medium according to the embodiments of the present disclosure may be a volatile memory or a non-volatile memory, or may also include both the volatile memory and the non-volatile memory. It should be noted that the memories in the method as described here are intended to include, but are not limited to, these and any other suitable types of memories.

A technical effect of the above-described non-transitory storage medium is the same as a technical effect of the above-described data processing method, which is not repeated here.

It should be noted that, the flow charts and block diagrams in the accompanying drawings illustrate the architecture, function, and operation of possible implementations of systems, methods, and computer program products according to various embodiments of the present disclosure. In this regard, each block in the flow charts or block diagrams may represent a module, a program segment, or a portion of codes, the module, the program segment, or a portion of codes includes at least one executable instructions for implementing stipulated logical function(s). It should also be noted that, in some alternative implementations, the functions noted in the blocks may occur out of the order noted in the accompanying drawings. For example, two blocks shown in succession may, in fact, be executed substantially concurrently, or the blocks may sometimes be executed in a reverse order, depending upon the functionality involved. It should also be noted that, each block of the block diagrams and/or flow charts, and combinations of blocks in the block diagrams and/or flow charts, may be implemented by special-purpose hardware-based systems that execute the specified functions or operations, or may also be implemented by a combination of special-purpose hardware and computer instructions.

Generally speaking, the various example embodiments of the present disclosure may be implemented in hardware or dedicated circuits, software, firmware, logic, or any combination thereof. Some aspects may be implemented in hardware, while other aspects may be implemented in firmware or software that may be executed by controllers, microprocessors, or other computing devices. When the respective aspects of the embodiments of the present disclosure are illustrated or described as block diagrams, flow charts, or represented by using some other graphs, it will be understood that the blocks, apparatuses, systems, techniques, or methods described here may be implemented as non-limitative examples in hardware, software, firmware, dedicated circuits or logic, general-purpose hardware or controllers, or other computing devices, or some combination thereof.

For the present disclosure, in addition to the above exemplary description, there are some points to be explained:
(1) Drawings of the embodiments of the present disclosure only refer to structures related with the embodiments of the present disclosure, and other structures may refer to general design.
(2) for the sake of clarity, in the drawings for illustrating the embodiments of the present disclosure, a thickness and a size of a layer or a structure is enlarged. It should be understood that, when an element such as a layer, a film, a region or a substrate or the like is referred to be "above" or "below" another element, the element may be directly located "above" or "below" the another element, or there may be an intermediate element.
(3) In case of no conflict, embodiments of the present disclosure and features in the embodiments may be combined with each other, to obtain new embodiments.

The above are only specific implementations of the present disclosure, but the scope of the present disclosure is not limited thereto; and the scope of the present disclosure should be subject to the scope of the following claims.

## Claims

1. A data processing method, comprising:
in response to receiving a first read request from a first master device to read first data, sending first snoop information for acknowledging whether a second master device has stored the first data to the second master device through a snoop channel,
wherein the first snoop information has a field indicating that the second master device needs to respond to whether the second master device has stored the first data with respect to the first snoop information.

2. The data processing method according to claim 1, further comprising:
in response to receiving a first signal returned by the second master device and indicating that the second master device has stored the first data, sending a second signal, to the second master device, indicating whether the first data needs to be forwarded from the second master device.

3. The data processing method according to claim 2, wherein
in response to the second signal indicating that the first data needs to be forwarded by the second master device, the second signal comprises a forward destination address, so that the second master device directly sends the first data to the first master device, or forwards the first data to the first master device through a cache coherent node,
wherein the cache coherent node is configured to maintain data coherence between a plurality of master devices.

4. The data processing method according to claim 3, wherein
in response to the second signal indicating that the first data needs to be forwarded by the second master device, the second signal further comprises data state conversion information, so that the first master device resets its own data state according to the data state conversion information after obtaining the first data.

5. The data processing method according to any one of claims 2 to 4, wherein the sending the second signal, to the second master device, indicating whether the first data needs to be forwarded from the second master device, comprises:
sending a second signal, to the second master device, indicating that the first data does not need to be forwarded from the second master device.

6. The data processing method according to any one of claims 2 to 5, further comprising:
determining whether the first data needs to be forwarded by the second master device based on comparison of a length or a congestion level of a data transmission path required to forward the first data,
wherein the length or the congestion level of the data transmission path required to forward the first data is obtained based on comparison between a plurality of master devices; the plurality of master devices all have stored the first data and received snoop information for acknowledging whether the first data is stored; and the plurality of master devices comprise the second master device.

7. The data processing method according to any one of claims 2 to 6, further comprising:
in response to a data transmission path for the second master device to forward data to the first master device being the shortest, determining to forward the first data from the second master device.

8. The data processing method according to any one of claims 2 to 6, further comprising:
in response to a congestion level of a data transmission path for the second master device to forward data to the first master device being the lowest, determining to forward the first data from the second master device.

9. The data processing method according to claim 8, further comprising:
obtaining congestion level information of a data transmission path required to forward the first data from a monitor arranged at each node, wherein the node comprises a master device node, a cache coherent node, or a routing node; and the monitor is configured to detect a congestion level of a node at a location where the monitor is located.

10. The data processing method according to any one of claims 2 to 9, further comprising:
in response to a need for the first master device to initiate the second signal to the second master device and a need for a third master device to initiate second snoop information for acknowledging whether the second master device has stored second data to the second master device, merging the second signal and the second snoop information, with a same tag being shared by the second signal and the second snoop information and simultaneously sending the second signal and the second snoop information to the second master device.

11. The data processing method according to any one of claims 1 to 10, further comprising:
in response to receiving the first read request from the first master device to read the first data, sending snoop information to one or more master devices closest to the first master device on a data transmission path for acknowledging whether the one or more master devices have stored the first data.

12. The data processing method according to any one of claims 1 to 10, further comprising:
in response to receiving the first read request from the first master device to read the first data, sending snoop information to one or more master devices belonging to a same cache coherent node or a same chip as the first master device for acknowledging whether the one or more master devices have stored the first data.

13. The data processing method according to any one of claims 1 to 12, further comprising:
in response to receiving a third signal that the second master device refuses to forward the first data, determining not to forward the first data from the second master device.

14. The data processing method according to claim 13, further comprising:
in response to determining not to forward the first data from the second master device, acquiring the first data from a master device having a forward state.

15. The data processing method according to claim 13, further comprising:
in response to determining not to forward the first data from the second master device, acquiring the first data from a master device closest to the first master device on a data transmission path among snooped master devices other than the second master device.

16. The data processing method according to claim 13, further comprising:
in response to determining not to forward the first data from the second master device, acquiring the first data from an internal memory.

17. The data processing method according to claim 13, further comprising:
in response to determining not to forward the first data from the second master device, acquiring the first data from a master device with a lowest congestion level among snooped master devices other than the second master device.

18. An electronic device, comprising:
a plurality of master devices, comprising a first master device and a second master device;
a cache coherent node, configured to send first snoop information for acknowledging whether the second master device has stored first data to the second master device through a snoop channel, in response to receiving a first read request from the first master device to read the first data,
wherein the first snoop information has a field indicating that the second master device needs to respond to whether the second master device has stored the first data with respect to the first snoop information.

19. A data processing apparatus, comprising:
at least one memory, configured to store a computer executable instruction; and
at least one processor, configured to execute the computer executable instruction,
wherein the computer executable instruction, when executed by the at least one processor, implements the method according to any one of claims 1 to 17.

20. A non-transitory storage medium, storing a computer executable instruction non-transitorily, wherein the computer executable instruction, when executed by a processor, implements the method according to any one of claims 1 to 17.
